# EUROPEAN PATENT SPECIFICATION

(11) **EP 0 942 041 B1**
(45) Date of publication and mention of the grant of the patent: **03.11.2004**
(21) Application number: 99301898.5
(22) Date of filing: 12.03.1999
(51) Int. Cl.: C08L 9/00, C08L 7/00, C08K 3/36, B60C 1/00

(54) **Rubber composition for tyre tread**
Kautschukmischung für Luftreifenlauffläche
Composition de caoutchouc pour bande de roulement

(30) Priority: 13.03.1998 JP 6342798
(43) Date of publication of application: 15.09.1999
(73) Proprietor: SUMITOMO RUBBER INDUSTRIES LIMITED, Kobe-shi, Hyogo-ken (JP)
(72) Inventor: Mizuno, Yoichi, Higashiyodogawa-ku, Osaka-shi, Osaka-fu (JP); Kawase, Masato, Takarazuka-shi, Hyogo-ken (JP); Matsuo, Toshiro, Kakogawa-shi, Hyogo-ken (JP)
(74) Representative: Manitz, Finsterwald & Partner

(56) References cited:
- DATABASE WPI Section Ch, Week 9439 Derwent Publications Ltd., London, GB; Class A12, AN 94-313815 XP002107623 & JP 06 240052 A (SUMITOMO RUBBER IND LTD) , 30 August 1994
- DATABASE WPI Section Ch, Week 9440 Derwent Publications Ltd., London, GB; Class A12, AN 94-322292 XP002107624 & JP 06 248117 A (SUMITOMO RUBBER IND LTD) , 6 September 1994

## Description

The present invention relates to a rubber composition for a tyre tread, which can provide a tyre having good abrasion resistance and balanced performance of traction property, braking property and cornering property.

As a factor controlling friction between tread rubber and road surface, which has an effect on the grip property of tyre, examples thereof are adhesive friction, digging friction and hysteresis friction.

In order to improve the adhesive friction by softening the tread rubber and increasing the contact area between the tread rubber and the road surface, it has been proposed to decrease the amount of filler in a rubber composition for the tyre tread, to use a butadiene rubber or an isoprene rubber which do not simply harden at low temperature, or to add a softening agent. But in each of these cases, there arises the problem that the resultant tyre is lacking in handling stability and abrasion resistance.

From the viewpoint of maintaining handling stability and abrasion resistance, it has been suggested to improve the wet grip property and the ice grip property, to increase the adhesive friction by decreasing the modulus at low temperature by using both silica as a part filler (carbon black) and a silane coupling agent (Japanese Unexamined Patent Publication No 73657/1996). In this case the cornering property of the obtained tyre is improved, but the traction property and the braking property are not improved sufficiently.

On the other hand, in order to improve the digging friction, it has been investigated to use a rubber foam as a rubber component and to use an organic fibre. In these cases the traction property and the braking property are improved, but the cornering property is not improved sufficiently.

In order to improve hysteresis friction, it has been proposed to employ a styrene-butadiene rubber and to increase the amount of filler. But then there arises the problem that the hardness becomes too high without relation with property on snow and ice.

So there is still not provided a rubber composition for a tyre tread having good abrasion resistance and balanced performances of traction, braking and cornering properties.

It is an object of the present invention to provide a rubber composition for a tyre tread, having good abrasion resistance and balanced performances of traction, braking and cornering.

According to one aspect the present invention provides a rubber composition for a tyre tread as set out in claim 1.

The average particle diameter of the above-mentioned powder articles is preferably 20 to 600 µm.

Another aspect of the present invention provides a truck and bus tyre using the rubber composition for a tyre tread.

The rubber component employed in the present invention is at least one rubber selected from the group consisting of a natural rubber (NR), and a butadiene rubber (BR) from the viewpoint of reinforcement and properties at low temperature.

In the case of a combination use of two or more thereof, the combination ratio can be suitably selected by the person skilled in the art. The combination ratio of NR and BR may be 100-0:30-70 (weight ratio).

For the silica employed in the present invention, the conventional silica employed in the tyre field can be employed without particular limitation.

Market place examples thereof are, for instance, Ultrasil VN3 (available from Deggusa Japan Co Ltd), Nipsil VN3 (available from Nippon Silica Co Ltd), Nipsil AQ (available from Nippon Silica Co Ltd), Tokusil UR (available from Tokuyama Corporation), Z1115Np (available from RHÔNE-POULENC CO), Z1165Mp (available from RHONE-POULENC CO).

The amount of silica is 5 to 30 parts by weight based on 100 parts by weight of the above-mentioned rubber component. From the viewpoint of balance of snow and ice performance and abrasion resistance, the amount is preferably 10 to 30 parts by weight, and even more preferably 20 to 30 parts by weight.

For the silane coupling agent employed in the present invention, the conventional silane coupling agent can be employed without particular limitation. Examples thereof are bis(3-triethoxysilylpropyl)tetrasulfen, a-mercaptopropyltrimethoxysilane, 3-thiocyanatepropyltriethoxysilane, and bis(3-triethoxysilylpropyl)disulfen.

The amount of the silane coupling agent in the present invention is 8 to 10% by weight from the viewpoint ot the effect of reinforcement and the higher cost.

It is easy for the rice husk to be dispersed in the mixing process, since it contains cellulose in its component and the compatibility with the rubber is good. The rice husk is lost from the tread surface easily due to abrasion when running. But the tear strength is not lowered and a crack in the tread is not formed easily, since it forms a weak bond with the rubber.

There is no problem of abrasion of the paved road surface when using a material having a higher hardness as a metal, and no problem of decrease in an adhesive effect with the surface of the frozen road due to increase of the hardness of the total rubber. On the other hand, spike or mechanical grip is not sufficiently demonstrated if a material having a lower hardness than the rice husks is used. The hardness of the rice husks, is suitable from this point of view. Since the rice husks as a natural product are powders having unevenness, they are compatible with rubber and provide the properties that not only tear strength but also the crack performance of the tread are not lowered.

The average particle size of the rice husks is preferably 20 to 600 µm, more preferably 100 to 200 µm. If the diameter thereof is below 20 µm, the desired spike effect is not sufficient. If the diameter thereof is above 600 µm, reinforcement and abrasion resistance become poor. Also the adhesive effect (grip performance on ice) is apt to decrease, since the surface of the tread after running easily becomes rough and the contact area of the rubber with an ice surface becomes less. From the viewpoint of balance of reinforcement and performance, the diameter is particularly more preferably 100 to 120 µm.

The amount of the rice husk in a rubber composition is 3 to 8 parts by weight based on 100 parts by weight of the rubber. If the amount is below 3 parts by weight, it is difficult to demonstrate the desired spike effect sufficiently. On the other hand, if the amount is above 8 parts by weight, the adhesive effect is apt to decrease and the abrasion property tends to be insufficient, since the rice husks themselves are in contact with the road surface due to the hardness of rubber and the contact area with the base rubber and the ice surface becomes less.

To the rubber composition of the present invention can be suitably added, except for the above-mentioned components, for example, a filler such as talc, clay and carbon black; a softening agent such as a process oil of paraffin, aromatic, naphthene; a tackifier such as a coumarone indene resin, a rosin resin and a cyclopentadienyl resin; a vulcanising agent such as sulfur and peroxide; an accelerator; a vulcanising assistant such as stearic acid and zinc oxide; an antioxidant if necessary in the range of not losing the object of the present invention.

The rubber composition of the present invention can be obtained by the conventional method using a Banbury mixer or an open roll.

The rubber composition of the present invention obtained by the above-mentioned method can be preferably employed as tyre tread.

A tyre with the rubber composition employed as tyre tread, especially a studless tyre, shows a spike effect by the method that the rice husk harder than the base rubber which exists on the surface of tread rubber scratches the road surface when running on a frozen road, particularly in braking, accelerating and circling. The grip performance on ice is clearly drastically improved, since an opening, an unevenness and an edge, formed on the surface of the tread by loss of the powdered article from the surface of the tread due to the abrasion, improves friction with the surface of ice.

### EXAMPLES

The present invention is further explained in detail based on the Examples concretely.

Table 1 shows each component employed in Examples based n 60 parts by weight of NR and 40 parts by weight of BR.

**TABLE 1**

| | | |
|---|---|---|
| butadiene rubber (BR) | | BR150B available from UBE Industries Ltd |
| silica | | Utrasil VN3 available from Degussa Co Ltd |
| carbon black | A | Diablack N220 available from Mitubishi Chemical Corporation |
| | B | Showblack N110 available from Showa Cabot Co Ltd |
| silane coupling agent | | Si69 available from Deggusa Co Ltd bis(3-triethoxysilylpropyl)tetrasulfen |
| rice husks | A | Sumicellco available from Sumitomo Seika Chemicals Co Ltd (average particle diameter 100-120µm) |
| | B | Sumicellco available from Sumitomo Seika Chemicals Co Ltd (average particle diameter 400-600µm) |
| | C | Sumicellco available from Sumitomo Seika Chemicals Co Ltd (average particle diameter 40-60µm) |
| process oil | | Diana process PS32 available from Idemitsu Kosan Co Ltd |
| wax | | Sannoxwax available from Ohuchi Shinko Kagaku Kogyo Co Ltd |
| antioxidant | | Ozonone 6C available from Seiko Chemical Co Ltd |
| stearic acid | | Kiri available from NOF CORPORATION |
| zinc oxide | | Ginrei R available from Toho Zinc Co Ltd |
| sulfur | | Sulfur available from Tsurumi Chemical Co Ltd |
| accelerator | | NOCCELER NS available from Ohuchi Shinko Kagaku Kogyo Co Ltd |

### EXAMPLES 1 TO 10

After mixing the component, the amounts of which are shown in Table 2, in a Banbury mixer, the mixture was vulcanised for 45 minutes at 150°C to obtain the rubber compositions 1 to 10. The obtained rubber compositions 1 to 10 were evaluated by measuring the following experiments.

### Experimental methods

### (1) Hardness of rubber (Hs)

The hardness of the rubber was measured at 25°C by the method described in HIS K6301. From the viewpoint of handling stability and abrasion resistance on wet or dry road, Hs if preferably large. But from the viewpoint of performance on snow and ice it is not preferably too large. It is 60 to 68.

### (2) Abrasion test

Abrasion was measured by using a Lambourn abrasion test machine made by Iwamoto Seisakusho Co ltd at the condition of surface rotating speed 50m/min, load weight 2.5 kg, amount of falling sands 15g/min, slip ratio 25% as abrasion 1 and slip ratio 50% as abrasion 2. The results were shown by using an index based on the following Comparative Example 1 as 100. The larger the index becomes, the more excellent the abrasion resistance becomes.

### (3) Car performance

Studless tyres for truck and bus having treads of the rubber composition were prepared by the conventional method. The tyres were fitted to a truck having a weight of 10 tons, and the performances were evaluated at Hokkaido Nayoro test course by the following methods.

### (i) Cornering time

At -13 to -4°C the running time was measured on a figure of eight shaped circular circuit of a few hundred meters length. The results are shown using an index based on the following Comparative Example 1 as 100. The larger the index becomes, the more excellent the cornering property becomes.

### (ii) Climbing time

At -13 to -4°C in order to confirm the traction in the front and rear direction, the running time was measured on a climbing road in the test course. The results are shown by using an index based on the following Comparative Example 1 as 100. The larger the index becomes, the more excellent the traction property becomes.

### (iii) Braking distance on ice

At -4 to -2°C running at 30 km/h, the braking distance on ice was measured. The results are shown by using an index based on the following Comparative Example 1 as 100. The larger the index becomes, the more excellent the braking property becomes.

### COMPARATIVE EXAMPLES 1 TO 14

Except for the amount shown in Table 3, comparative rubber compositions 1 to 6 were obtained and evaluated same as in Example 1. The results are shown in Table 3.

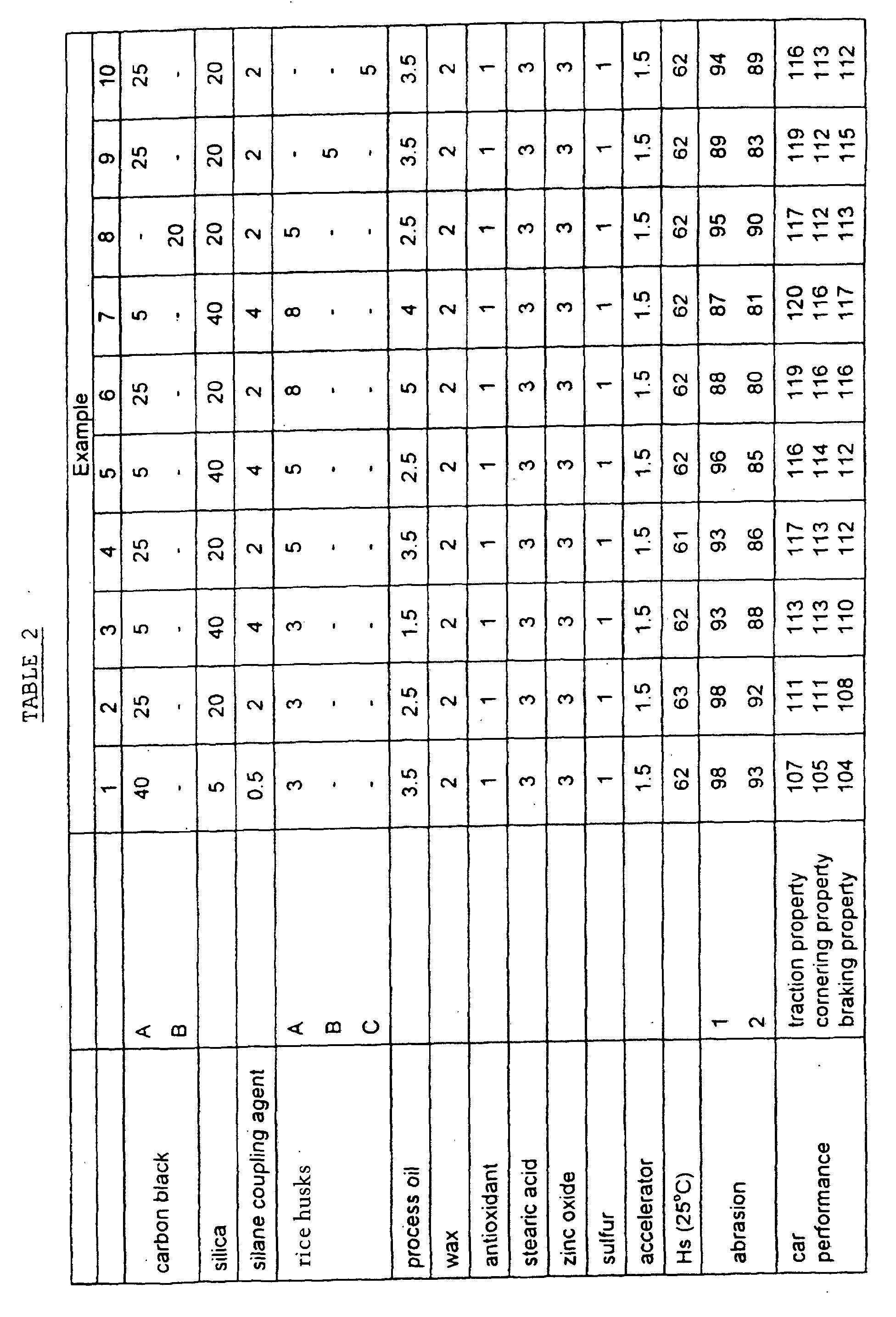

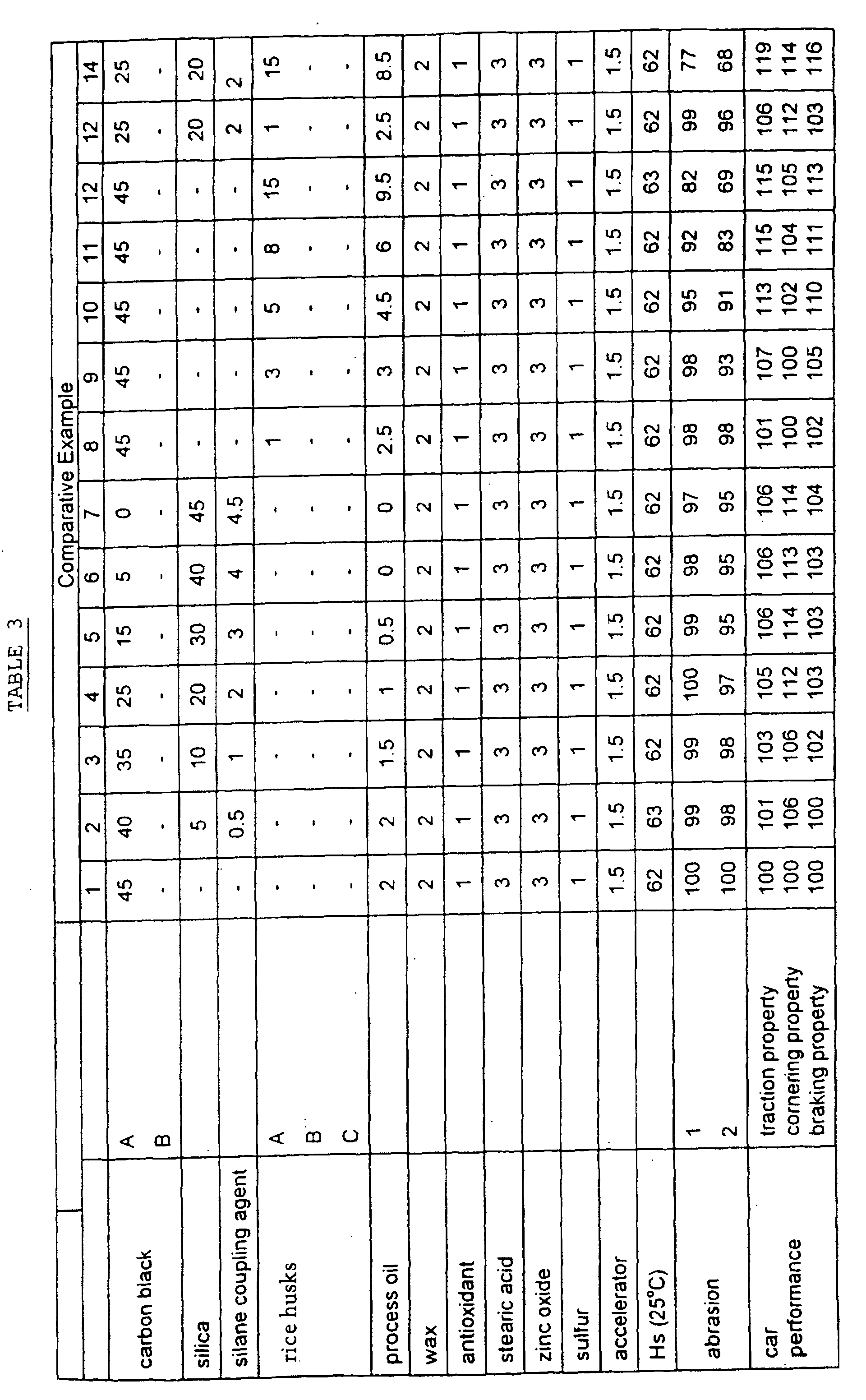

As is clear from the results in Examples 1 to 7, decrease of the abrasion resistance of the rubber composition of the present invention is slight so the abrasions resistance is good and the composition is excellent in traction properties, braking and cornering.

As is clear from the results in Example 8, even if changing the type of carbon black, the excellent performances were shown similarly, and from the results of Examples 8 to 10, the rice husks having an average diameter of 100 to 120 µm were excellent in balance of abrasion resistance on snow and ice.

As is clear from the results in Examples 1 to 7 and Comparative Example 14, if the amount of the powdered article containing rice husks is beyond 8 parts by weight, the abrasions performance is drastically lowered and during performances are not more improved.

By the present invention there is provided a rubber composition for a tyre tread, having low decrease in abrasion resistance and balanced performance of traction property, braking property and cornering property.

## Claims

1. A rubber composition for a tyre tread comprising 100 parts by weight of at least one rubber component selected from the group consisting of a natural rubber, an isoprene rubber and a butadiene rubber, 5 to 30 parts by weight of a silica, 0.5 to 4.0 parts by weight of a silane coupling agent and 3 to 8 parts by weight of a rice husk, wherein said rubber composition has a rubber hardness of 60 to 68 when measured at 25°C.

2. A rubber composition for the tyre tread of claim 1, **characterised in that** the average diameter of the rice husk is 20-600 µm.

3. A truck and bus tyre, **characterised by** a tread comprising the rubber composition of claim 1 or 2.

## Patentansprüche

1. Gummimischung für eine Reifenlauffläche, die 100 Gew.-Teile mindestens eines Kautschukbestandteils ausgewählt aus der Gruppe bestehend aus Naturkautschuk, Isoprenkautschuk und Butadienkautschuk, 5 bis 30 Gew.-Teile eines Silica, 0,5 bis 4,0 Gew.-Teile eines Silankupplungsmittels und 3 bis 8 Gew.-Teile Reishülsen enthält, wobei diese Gummimischung eine Gummihärte von 60 bis 68 aufweist, wenn sie bei 25°C gemessen wird.

2. Gummimischung für die Reifenlauffläche des Anspruch 1,
**dadurch gekennzeichnet, dass** der durchschnittliche Durchmesser der Reishülsen 20-600 µm beträgt.

3. Lastkraftwagen- und Busreifen, **gekennzeichnet durch** ein Lauffläche, die die Gummimischung des Anspruchs 1 oder 2 aufweist.

## Revendications

1. Composition de caoutchouc pour bande de roulement de pneu comprenant 100 parties en poids d'au moins un composant caoutchouc choisi dans le groupe composé d'un caoutchouc naturel, d'un caoutchouc isoprène et d'un caoutchouc butadiène, 5 à 30 parties en poids d'une silice, 0,5 à 4,0 parties en poids d'un agent de pontage au silane et 3 à 8 parties en poids d'une balle de riz, dans laquelle ladite composition de caoutchouc a une dureté du caoutchouc de 60 à 68 lorsqu'elle est mesurée à 25 °C.

2. Composition de caoutchouc pour la bande de roulement de pneu de la revendication 1, **caractérisée en ce que** le diamètre moyen de la balle de riz va de 20 à 600 µm.

3. Pneu de camion et d'autobus, **caractérisé par** une bande de roulement comprenant la composition de caoutchouc de la revendication 1 ou 2.
